# EUROPEAN PATENT SPECIFICATION

(11) **EP 3 994 109 B1**
(45) Date of publication and mention of the grant of the patent: **09.08.2023**
(21) Application number: 20732097.9
(22) Date of filing: 26.05.2020
(51) Int. Cl.: C08L 17/00

(54) **INSULATION MATERIAL AND A METHOD FOR ITS PRODUCTION**
ISOLIERMATERIAL UND VERFAHREN ZU DESSEN HERSTELLUNG
MATÉRIAU ISOLANT ET PROCÉDÉ POUR SA PRODUCTION

(30) Priority: 05.07.2019 CZ 20190446
(43) Date of publication of application: 11.05.2022
(73) Proprietor: First Point A.S., 69501 Hodonín (CZ)
(72) Inventor: CHLANDOVÁ, Gabriela, 51724 Borohrádek (CZ); SPANIEL, Petr, 51771 Ceské Mezirící (CZ)
(74) Representative: Skoda, Milan
(86) International application number: PCT/CZ2020/000019
(87) International publication number: WO 2021/004556

## Description

### Technical Field

The invention relates to an insulating material, in particular a permeable fire-proof sound-insulating material containing water glass and rubber, and to a method for its production.

### State of the Art

From current technology is known a technical problem, which is solving the recycling of used rubber, particularly used pneumatic tyres.

Used tyres are usually deposited in tips or liquidated by burning. Both methods are not ecological.

As well, the use of recycled tyres in the form of rubber granules is known. These granules of various roughness are used, for example, in the car industry where they serve in the production of bumpers, seals, and tyres. There use is also found in building as an additive to asphalt in road building. Further uses are the preparation of surfaces of playgrounds and sports-grounds, in the production of safety thresholds at level crossings, interlocking tiles or covers and gratings, which are relatively more resistant to chemical gritting and frost.

Furthermore, there are materials which use bound rubber granules, or granules of other plastic foam matter and organic polymer binders. This binding presents a number of disadvantages, among which primarily belong flammability and instability.

From the patent application CZ PV2017-127 an acoustic and thermal insulator for use in construction is known, which consists of a slurry in an air-hardening mixture containing 5 to 76 wt% of bulk thermal insulation material with a specific volumetric mass of less than 300 kg/m³, 9 to 36 wt% of brick dust fractions 0.001 to 1 mm, 6 to 30 wt% of water glass, 7 to 30 wt% of water and up to 5 wt% detergent. The disadvantage of this material is that it has lower thermal insulation properties, higher flammability and less cohesion.

Another patent application CZ PV1990-2151 discloses a thermal insulating material with a fire protection effect, which contains an aqueous dispersion of a film-forming thermoplastic polymer, hydrosol silica, inert mineral fillers, waste silica from ferroalloys, expanded volcanic hydraulic glass, loose mixtures of cork and rubber granules, and water. The binder here is a polymeric thermoplastic aqueous dispersion.

The disadvantage is the lower insulation capacity and mainly lower fire resistance. From the aforementioned current technology it is clear that main disadvantages of current technology are the lower insulating properties of the known materials and their relatively low fire resistance.

Derwent WPI abstract (AN 1989-199122 and related patent application SU 1 432 028 A) relates to a filler produced by treatment of 5-15 mm rubber crumbs (waste from the shoe production) with aqueous water glass solution (of density 1.25 glee), passed into granulator and knurled with cement-ash mixture. The filler is used in the production of fire-proof building materials. D1 is silent about the use of 0.1 to 1.0 wt% carbon black covering the surface of the, rubber particles, water glass stabilizer, water glass hardener and aluminum hydroxide.

The object of the invention is the construction of an insulating material which will use recycled rubber and plastic waste, while having high fire resistance, while at the same time being flexible and pliable and, be resistant to degradation.

### Principle of the Invention

The above-mentioned drawbacks are largely eliminated and the objects of the invention are fulfilled by an insulating material, in particular a permeable fire-proof sound-insulating material containing water glass and rubber, specifically recycled rubber, which according to the invention is characterised by that it consists of a harden-able compound, which contains 47 to 61 wt% rubber granulate, 30 to 50 wt% of aqueous sodium silicate, 0.1 to 0.5 wt% water glass stabiliser, 0.4 to 1.5 wt% water glass hardener, and 2 to 6 wt% aluminium hydroxide, the surface of the rubber granulate being provided with carbon black, the carbon black constituting 0.1 to 1 wt% of total weight. The advantage of the insulating material is high non-flammability and heat resistance.

Another advantage is very good permeability and anti-fungal effects. A great advantage is then very good adhesion to all surfaces, and excellent adhesive and sealing effects. The main advantage is the very good sound insulation ability. The rubber granulate can to advantage be replaced by another equivalent granulate with the same or similar properties, for example a plastic granulate, the material of this granulate then being, for example, foam rubber. The advantage of using aluminium hydroxide is that it significantly improves flame retardancy. The advantage of providing the surface of the rubber granulate with carbon black is that the carbon black thus applied reduces thermal conductivity, with the carbon black to advantage absorbing to some extent into the rubber granulate, thereby stabilising its bond with the rubber granulate in the resulting mixture. A further advantage is that the carbon black acts as a flame co-retardant. Another advantage is that carbon black acts as a retarder of degradation processes due to solar radiation. They capture common oxygen free radicals and thus slow down natural degradation of the polymer. The water glass hardener may be glycerol mono to triacetate or a mixture thereof.

In an advantageous embodiment, the rubber granulate is recycled. Advantageously, the recycled rubber granulate can be replaced by other plastic foam materials, such as PUR and PIR foam and foam rubber.

It is also preferred that the stabilisers of the water glass are hydrophilic alkoxy alkyl-ammonium salts.

A great advantage is then that the aqueous sodium silicate solution has a density in the range of 1370 to 1400 kg/m³ and a molar ratio of SiO₂ to Na₂O is in the range of 3.2 to 3.4. The ratio of molar masses of silicon oxide to sodium oxide and the associated density of the solution and the concentration of the solution have a significant effect on the rheological properties of water glass as a polymer mixture, on the electrical properties, compressibility and adhesive strength as in an electrolyte, further to hardness, strength, etc. The advantage of the above stated parameters is that the resulting insulating material is partially flexible and pliable after solidification.

The mentioned disadvantages are largely removed and the objectives of the invention are fulfilled by a method for producing insulating material, specifically a method for producing permeable fire-proof sound-insulating material containing water glass and rubber, which according to the invention is characterised by that firstly the rubber granules are mixed with an aqueous carbon black solution so that that their entire surface is coated with carbon black, then aluminium hydroxide is added and the whole is mixed to form an insulating mixture, and then a water glass stabiliser is added to the aqueous sodium silicate solution, and then a water glass hardener is mixed into the solution. This solution is stirred for 1 to 10 minutes to form a binder solution, and then the insulating mixture is poured into the binder solution while constantly stirring, and the whole is mixed, and then the resulting mixture is poured onto the application site. The advantage is that it is possible to produce both solid products, such as insulation panels and fittings, and the insulation material can even be applied in its liquid state.

It is very advantageous if the binder solution, before the insulating mixture is added, is preheated to a temperature of approximately 65°C. At this temperature, weak interactions are formed between the water glass and the rubber and a flexible and strong connection is formed.

It is advantageous if the resulting mixture is poured into the application site, which is a mould, and further the amount of binder solution is extruded from the resulting mixture by means of a press so as to produce the desired ratio of insulating mixture and binder solution. The advantage is that it is possible to easily produce a product with precise parameters.

It is also advantageous if the resulting mixture is finally left to undisturbed until hardened. The advantage is that the resulting insulation can be created exactly with respect to the shape parameters of the insulated space, with the fact that due to the fact that the length of hardening can be regulated, the insulation material can be precisely shaped into the desired shape.

The main advantage of the insulating material and the method of its production according to the invention is that it has significantly better insulating properties and higher fire resistance than previously known insulating materials using recycled rubber or recycled foam materials, being vapour permeable, resistant to rainwater and moisture, anti-fungal, flexible, resistant to external influences such as UV radiation. Another advantage is the simple methods of application. It is possible to create both cladding boards and fittings from the insulating material, and it can be easily applied as a liquid mixture by stretching, casting and spraying. The insulating material is thus suitable for floors and ceilings, horizontal and slightly sloping roofs. The advantage is that sodium silicate after hardening effectively reflects flames, and because it has a negative heat of combustion, it effectively reduces combustion of each mixture in which it is present. It perfectly coats the rubber granulate and protects it from fire.

Unlike insulation with mineral wool or polystyrene boards, it is well applied to hard-to-reach places and to rugged edges of the surface. It has good adhesion to various substrates, including trapezoidal and folded sheets, Eternit or asphalt, which are usually on roofs. At the same time, the insulating material is strong enough, it can also be walkable. A great advantage of the insulating material according to the invention over the existing materials is also the possibility of combining boards and a liquid mixture. One of the problems associated with the anchoring of conventional polystyrene boards is the filling of joints between the boards and the holes around the dowels. Thanks to the possibility of filling these gaps and openings with a liquid form of insulating material, a uniform surface without thermal bridges is created very easily and quickly. A great advantage is also that the semifinished insulating material in the form of a liquid mixture can be applied as an insulating lining in industry, e.g., appliances, electrical technology, automotive, etc.

### Examples of the Performance of the invention

### Example 1

The permeable fire-proof sound-insulating material is composed of a harden-able mixture which contains 54 wt% of recycled rubber granulate, 40 wt% of aqueous sodium silicate, 0.3 wt% water glass stabiliser, 4 wt% of aluminium hydroxide, and 1.2 wt% water glass hardener.

The surface of the rubber granulate is provided with carbon black, the carbon black making up 0.5 wt% of total weight.

The water glass stabilisers are hydrophilic alkoxy alkyl-ammonium salts, in the form of a 98% aqueous solution of N,N,N',N'-Tetrakis (2-hydroxypropyl) ethylenediamine.

The aqueous sodium silicate solution has a density in the range of 1380 kg/m³ and a molar ratio of SiO₂ to Na₂O in the range of 3.3.

The water glass hardener is a mixture of pure glycerol diacetate / triacetate in a ratio of 7:3 by volume parts, with a concentration of 3 wt% to pure water glass.

According to the method of manufacturing a breathable fire-retardant sound-insulating material, the rubber granules are first mixed with an aqueous solution with a concentration of 25 wt% carbon black so that their entire surface is coated with carbon black, aluminium hydroxide is added and the whole is mixed to form an insulating mixture, and a water glass stabiliser is added to the sodium silicate solution, and then a water glass hardener is mixed into the solution, this solution is then stirred for 3 minutes to form a binder solution, which is preheated to 65°C, and the insulating mixture is further mixed into the binder solution, and the resulting mixture is further poured into a silicone mould, and the resulting mixture is further pressed from a press extrudes such an amount of binder solution to produce the desired ratio of insulating mixture to binder solution.

The resulting product is an insulation board or insulation fitting.

### Example 2

The permeable fire-proof sound-insulating material is composed of a harden-able mixture which contains 61 wt% of recycled rubber granulate, 30 wt% of aqueous sodium silicate, 0.1 wt% water glass stabiliser, 6 wt% of aluminium hydroxide, and 1.5 wt% water glass hardener.

The surface of the rubber granulate is provided with carbon black, the carbon black making up 1 wt% of total weight.

The water glass stabilisers are hydrophilic alkoxy alkyl-ammonium salts, in the form of a 98% aqueous solution of N,N,N',N'-Tetrakis (2-hydroxypropyl) ethylenediamine.

The aqueous sodium silicate solution has a density in the range of 1400 kg/m³ and a molar ratio of SiO₂ to Na₂O in the range of 3.4.

The water glass hardener is a mixture of pure glycerol diacetate / triacetate in a ratio of 7:3 by volume parts, with a concentration of 5 wt% to pure water glass.

According to the method of manufacturing a breathable fire-retardant sound-insulating material, the rubber granules are first mixed with an aqueous solution with a concentration of 25 wt% carbon black so that their entire surface is coated with carbon black, aluminium hydroxide is added and the whole is mixed to form an insulating mixture, and a water glass stabiliser is added to the sodium silicate solution, and then a water glass hardener is mixed into the solution, this solution is then stirred for 10 minutes to form a binder solution, which is preheated to 65°C, and the insulating mixture is further mixed into the binder solution, and the resulting mixture is further poured into a silicone mould, and the resulting mixture is further pressed from a press extrudes such an amount of binder solution to produce the desired ratio of insulating mixture to binder solution.

Finally, the resulting mixture is left undisturbed until hardened.

The resulting product is an insulating fitting.

### Example 3

The permeable fire-proof sound-insulating material is composed of a harden-able mixture which contains 47 wt% of recycled rubber granulate, 50 wt% of aqueous sodium silicate, 0.5 wt% water glass stabiliser, 2 wt% of aluminium hydroxide, and 0.4 wt% water glass hardener.

The surface of the rubber granulate is provided with carbon black, the carbon black constituting 0.1 wt% of total weight.

The water glass stabilisers are hydrophilic alkoxy alkyl-ammonium salts, in the form of a 98% aqueous solution of N,N,N',N'-Tetrakis (2-hydroxypropyl) ethylenediamine.

The aqueous sodium silicate solution has a density in the range of 1370 kg/m³ and a molar ratio of SiO₂ to Na₂O in the range of 3.2.

The water glass hardener is a mixture of pure glycerol diacetate / triacetate in a ratio of 7:3 by volume, with a concentration of 0.8 wt% to pure water glass.

According to the method of manufacturing a breathable fire-retardant sound-insulating material, the rubber granules are first mixed with an aqueous solution with a concentration of 25 wt% carbon black so that their entire surface is coated with carbon black, aluminium hydroxide is added and the whole is mixed to form an insulating mixture, and a water glass stabiliser is added to the sodium silicate solution, and then a water glass hardener is mixed into the solution, this solution is then stirred for 1 minute to form a binder solution, which is preheated to 65 °C, and the insulating mixture is further mixed into the binder solution, and the resulting mixture is further poured into an application site which is a flat divided attic space, spread, surface-treated and left undisturbed until hardened.

### Industrial Application

The insulating material according to the invention can in particular be used to create a permeable fire-proof sound-insulating system in the building industry.

## Claims

1. An insulating material, in particular a permeable fire-proof sound-insulating material comprising water glass and and rubber, specifically recycled rubber, **characterised in that** it consists of a harden-able mixture which contains 47 to 61 wt% of rubber granulate, 30 to 50 wt% of aqueous sodium silicate, 0.1 to 0.5 wt% water glass stabiliser, 0.4 to 1.5 wt% water glass hardener, and 2 to 6 wt% of aluminium hydroxide, the surface of the rubber granulate being provided with carbon black, the carbon black constituting 0.1 to 1 wt% of total weight.

2. The insulating material according to claim 1, **characterised in that** the rubber granulate is recycled.

3. The insulating material according to any one of the preceding claims, **characterised In that** the water glass stabilisers are hydrophilic alkoxy alkyl-ammonium salts.

4. The insulating material according to one of the preceding claims, **characterised in that** the aqueous sodium silicate solution has a density in the range from 1370 to 1400 kg/m³.

5. The insulating material according to any one of the preceding claims, **characterised in that** the aqueous sodium silicate solution has a molar ratio of SiO₂ to Na₂O in the range from 3.2 to 3.4.

6. A method for producing insulating material, in particular a method for the production of a permeable fire-proof sound-insulating material comprising water glass and rubber, according to any one of claims 1 to 5, **characterised in that** the rubber granules are first mixed with an aqueous solution of carbon black so as to coat their entire surface, then is added to the aqueous sodium silicate solution aluminium hydroxide and the whole is mixed so as to form an insulating mixture, and then a water glass stabiliser is added to the aqueous sodium silicate solution, and then to this solution is mixed water glass hardener, with this solution being further stirred for 1 to 10 minutes to form a binder solution, and the insulating mixture is added to the binder solution with constant stirring, and the whole is mixed, and the resulting mixture is then poured into the application site.

7. The method for producing insulating material according to claim 6, **characterised in that,** before the insulation mixture is added, the binder solution is preheated to a temperature of 65°C.

8. The method for producing insulating material according to claims 6 and 7, **characterised in that** the resulting mixture is poured into the application site, which is a mould, and further, from the resulting mixture such an amount of binder solution is extruded by means of a press so that the desired ratio of insulating mixture and binder solution is obtained.

9. The method for producing insulating material, according to any one of claims 6 and 7, **characterised in that** finally, the resulting mixture is left undisturbed until hardened.

## Patentansprüche

1. Isolationsmaterial, insbesondere atmungsaktives feuerfestes schalldichtes Material, das Wasserglas und Gummi, insbesondere recyceltes Gummi, enthält, **dadurch gekennzeichnet, dass** es durch eine aushärtbare Mischung gebildet ist, die 47 bis 61 Volumenprozent des Gummigranulats, 30 bis 50 Volumenprozent des wässrigen Natriumsilikats, 0,1 bis 0,5 Volumenprozent eines Wasserglasstabilisators, 0,4 bis 1,5 Volumenprozent eines Wasserglashärters und 2 bis 6 Volumenprozent des Aluminiumhydroxids enthält, wobei die Oberfläche des Gummimaterials mit Ruß überzogen ist, wobei der Ruß 0,1 bis 1 Volumenprozent des Gesamtgewichtes bildet.

2. Isolationsmaterial, gemäß Anspruch 1, **dadurch gekennzeichnet, dass** das Gummigranulat recycelbar ist.

3. Isolationsmaterial, gemäß einem der vorstehenden Ansprüche, **dadurch gekennzeichnet, dass** der Wasserglasstabilisator hydrophile alkoxyle Alkylamoniumsalze sind.

4. Isolationsmaterial, gemäß einem der vorstehenden Ansprüche, **dadurch gekennzeichnet, dass** die wässrige Lösung des Natriumsilikats die Dichte im Bereich 1370 bis 1400 kg/m³ hat.

5. Isolationsmaterial, gemäß einem der vorstehenden Ansprüche, **dadurch gekennzeichnet, dass** die wässrige Lösung des Natriumsilikats das Molverhältnis von Si0₂ und Na₂0 im Bereich 3,2 bis 3,4 hat.

6. Herstellungsart des Isolationsmaterials, insbesondere die Herstellungsart des atmungsaktiven feuerfesten schalldichten Isolationsmaterials, das Wasserglas und Gummi enthält, gemäß einem der Ansprüche 1 bis 5, **dadurch gekennzeichnet, dass** das Gummigranulat zuerst mit einer wässrigen Rußlösung so durchgerührt wird, dass die ganze Oberfläche der Körner mit Ruß überzogen, dann das Aluminiumhydroxid zugefügt und alles so durchgerührt wird, dass eine Isoliermischung entsteht, und dass dann der Wasserglasstabilisator der Natriumsilikatlösung zugefügt wird und dass nachfolgend der Wasserglashärter in diese Lösung beigemischt wird, wobei diese Lösung nachfolgend 1 bis 10 Minuten so gerührt wird, dass eine Binderlösung entsteht, und die Isoliermischung dann in die Binderlösung eingerührt wird, und die entstandene Mischung dann in die Anwendungsstelle gegossen wird.

7. Herstellungsart des Isolationsmaterials, gemäß Anspruch 6, **dadurch gekennzeichnet, dass** die Binderlösung vor dem Einbringen der Isoliermischung auf die Temperatur von 65°C vorgewärmt wird.

8. Herstellungsart des Isolationsmaterials, gemäß Anspruch 6 und 7, **dadurch gekennzeichnet, dass** die entstandene Mischung in die Anwendungsstelle gegossen wird, die eine Matrize ist, wobei nachfolgend aus der entstandenen Mischung mit Hilfe einer Presse solche Menge der Binderlösung ausgedrückt wird, dass das geforderte Verhältnis der Isoliermischung und der Binderlösung entsteht.

9. Herstellungsart des Isolationsmaterials, gemäß einem der Ansprüche 6 bis 8, **dadurch gekennzeichnet, dass** die entstandene Mischung zum Schluss bis zur Aushärtung in Ruhe gelassen wird.

## Revendications

1. Matériau isolant, en particulier matériau d'isolation acoustique perméable et résistant au feu, contenant du verre liquide et du caoutchouc, en particulier du caoutchouc recyclé, **caractérisé en ce qu'**il est constitué d'un composé durcissable contenant 47 à 61 % en poids de granules de caoutchouc, 30 à 50 % en poids de solution liquide de silicate de sodium, 0,1 à 0,5 % en poids de stabilisateur de verre liquide, 0,4 à 1,5 % en poids de durcisseur de verre liquide et 2 à 6 % en poids d'hydroxyde d'aluminium, la surface des granulés de caoutchouc étant recouverte de noir de carbone, le noir de carbone constituant 0,1 à 1 % en poids du poids total.

2. Matériau isolant selon la revendication 1, **caractérisé en ce que** le granulé de caoutchouc est recyclé.

3. Matériau isolant, selon l'une quelconque des revendications précédentes, **caractérisé en ce que** le stabilisateur de verre liquide est constitué de sels d'alkoxyle d'alkylammonium hydrophiles.

4. Matériau isolant, selon l'une quelconque des revendications précédentes, **caractérisé en ce que** la solution aqueuse de silicate de sodium a une densité allant de 1 370 à 1 400 kg/m3.

5. Matériau isolant, selon l'une quelconque des revendications précédentes, **caractérisé en ce que** la solution aqueuse de silicate de sodium présente un rapport molaire SiO₂/Na₂O compris entre 3,2 et 3,4.

6. Procédé de fabrication d'un matériau isolant, en particulier procédé de fabrication d'un matériau d'isolation acoustique perméable et résistant au feu, contenant du verre liquide et du caoutchouc, selon l'une quelconque des revendications 1 à 5, **caractérisé en ce que,** premièrement les granulés de caoutchouc sont mixés avec une solution aqueuse de noir de carbone de manière à ce que toute leur surface soit recouverte de noir de carbone, puis l'hydroxyde d'aluminium est ajouté et le tout est mélangé de manière à ce qu'un composé isolant soit formé, et en outre, un stabilisateur de verre liquide est ajouté à la solution de silicate de sodium, puis un durcisseur de verre liquide est ajouté à cette solution, et cette solution est ensuite mélangée de 1 à 10 minutes pour former une solution de liant, puis le mélangé isolant est mélangé à la solution de liant, et enfin le mélange résultant est versé dans le lieu d'application.

7. Procédé de fabrication du matériau isolant selon la revendication 6, **caractérisé en ce que** la solution de liant est préchauffée à une température de 65°C avant que le mélange isolant ne soit inséré.

8. Procédé de fabrication du matériau isolant selon les revendications 6 et 7, **caractérisé en ce que,** le mélange obtenu est versé dans un lieu d'application, qui est un moule, et **en ce que**, en outre, une quantité de solution de liant est extraite du mélange obtenu au moyen d'une presse pour produire un rapport souhaité entre le mélange isolant et la solution de liant.

9. Procédé de fabrication du matériau isolant, selon l'une quelconque des revendications 6 à 8, **caractérisé en ce que** le mélange obtenu est finalement laissé au repos jusqu'à ce qu'il soit durci.
